# EUROPEAN PATENT APPLICATION

(11) **EP 0 680 783 A2**
(43) Date of publication of application: **08.11.1995**
(21) Application number: 95302962.6
(22) Date of filing: 01.05.1995
(51) Int. Cl.: B01J 20/34

(54) **Two-step thermal regeneration of adsorbents**

(30) Priority: 05.05.1994 US 238399
(71) Applicant: DOW CORNING CORPORATION, Midland, Michigan 48686-0994 (US)
(72) Inventor: Halm, Roland Lee, Midland, Michigan (US); Hasler, James Richard Jr., Madison, Indiana (JP)
(74) Representative: Bullows, Michael

(57) **Abstract**

The present invention is a two-step process for the regeneration of an adsorbent bed used to separate two or more components of a liquid mixture. In a first step, the non-adsorbed and non-purified liquids accumulated in the interstitual cavities or macro pores of the adsorbent bed are vaporized and recovered from the bed; and in a second step, the adsorbed component is recovered from the adsorbent bed. The present process is particularly useful in applications where the non-adsorbed component has high commercial value. It is especially useful for the regeneration of adsorbent beds used to separate hydrocarbons from halosilanes.

## Description

The present invention is a two-step process for the regeneration of an adsorbent bed used to separate two or more components of a liquid mixture. In a first step, the non-adsorbed and non-purified liquids accumulated in the interstitual cavities or macro pores of the adsorbent bed are vaporized and recovered from the bed; and in a second step, the adsorbed component is recovered from the adsorbent bed. The present process is particularly useful in applications where the non-adsorbed component has high commercial value. It is especially useful for regenerating adsorbent beds used to separate hydrocarbons from halosilanes.

Processes for separating gaseous and liquid mixtures by preferential adsorption of species within the mixtures are well known and are discussed, for example, in Kirk-Othmer, Encyclopedia of Chemical Technology, Fourth Edition, John Wiley and Sons, NY, Vol. 1, pages 493-600. For such processes to be commercially useful, it is necessary that the adsorption material have a high surface area. High surface area is typically achieved when the adsorption materials are highly porous. Examples of porous materials include activated carbon, carbon molecular sieves, zeolites, silicalites, silica gels and the like. A common problem associated with the use of these porous adsorbents is that after becoming saturated with the adsorbed material, they also contain significant amounts of non-adsorbed and non-purified materials within their interstitual cavities or the macro pores of the adsorbent bed. In typical processes for regenerating a saturated bed, the non-adsorb material is recovered from the bed in mixture with the adsorbed material.

This regeneration method can cause significant amounts of the non-adsorbed material to be unusable unless additional separation steps are taken. In those situations where the non-adsorbed material has high economic value, this loss of material is undesirable. Our invention is a staged process which removes the non-adsorbed material from the saturated adsorbent bed before desorption of the adsorbed material. In this way, the non-adsorbed material remaining in the interstitual cavities and macro pores of the adsorbent bed can be recovered with levels of the adsorbed material therein similar to those found in the feed mixture.

U.S. Patent 4,874,524 describes a process where at least two components of a feed mixture are adsorbed by an adsorbent material during an adsorption step. It specifically teaches that when at least two of the adsorbed components have different affinities for the adsorbent, they can be separated by selective desorption by proper temperature selection.

In Kirk-Othmer, supra, page 554, it is disclosed that for separation of gas mixtures by adsorption, a cocurrent depressurization step can be used to reduce the amount of weakly adsorbed species retained in the bed voids.

The present invention is a two-step adsorption-desorption process for separating a liquid mixture of two or more components. This process comprises:
(A) feeding a liquid mixture of components to an adsorbent bed which selectively adsorbs at least one component from the mixture and does not substantially adsorb at least one component from the mixture;
(B) recovering an effluent from the adsorbent bed reduced in the adsorbed component;
(C) substantially saturating the adsorbent bed with the adsorbed component;
(D) stopping the feed of the liquid mixture of components to the substantially saturated adsorbent bed; and
(E) regenerating the adsorbent bed in a two-step process, where in a first step liquid non-adsorbed component within the bed is vaporized and recovered and in a second step adsorbed component is recovered from the adsorbent bed.

This process is a significant improvement over other processes for separating a liquid mixture of components by selective adsorption-desorption of at least one of the components onto a solid adsorbent. The present process is particularly useful in those situations where an adsorbent bed is being used to adsorb impurities from a desired liquid component. Typically, in such a process, the adsorbent is saturated with the impurity, feed is stopped to the adsorption bed and the adsorption bed is regenerated by applying heat, or a combination of heat and reduced pressure, to the bed which is sufficient to cause desorption of the adsorbed component. The problem encountered with such standard methods is that a substantial amount of the desired non-adsorbed component is also present within the interstitual cavities and macro pores of the adsorbent bed and is recovered from the adsorbent bed in combination with the desorbed species. Often it is not possible, or not economically feasible, to recover the desired component from this combination or mixture. When the non-adsorbed component has substantial commercial importance or is expensive to make, this loss can represent a substantial economic loss.

We have found that standard adsorption-desorption processes can be improved such that non-adsorbed materials present in the interstitual cavities and macro pores of adsorbent beds are recovered without substantial contamination by the adsorbed material during the desorption process. Our process involves a first desorption step where temperature and pressure of the adsorbent bed are regulated such that the non-adsorbed material is heated above its boiling point and recovered from the adsorbent bed without substantially desorbing the adsorbed component. By "substantially desorbing", it is meant that the material recovered from step one of the desorption process has less of the adsorbed component in combination with the non-adsorbed component than if the process had been conducted as a single step regenerative process.

Our process can be used to separate any liquid mixture of components where at least one component of the mixture adsorbs to the adsorbent and the other component(s) do not substantially adsorb to the adsorbent. The non-adsorbed component(s) can also be vaporized within the adsorbent bed under conditions that do not cause a substantial desorption of the adsorbed component. By "does not substantially adsorb" to the adsorbent, it is meant that the non-adsorbing component is recovered from the adsorbent bed as an effluent reduced in the adsorbed component during the adsorption segment of the adsorbed component.

An example of liquid mixtures which can be satisfactorily separated by our method is liquid mixtures of halosilanes contaminated with hydrocarbons. This liquid mixture comprises, for example, chlorosilanes described by formula RₐH_{b}SiCl_{4-a-b}, where a=0 to 3, b=0 to 3, a+b=0 to 3 and each R is an independently selected monovalent hydrocarbon radical comprising one to 12 carbon atoms. R therein is methyl, ethyl, propyl, tert-butyl, vinyl, allyl and phenyl. These chlorosilanes are trimethylchlorosilane, dimethyldichlorosilane, dimethylchlorosilane, phenylmethyldichlorosilane, phenyltrichlorosilane trichlorosilane, tetrachlorosilane and vinylmethyldichlorosilane. The hydrocarbons removed from this chlorosilane mixture is those typically found in trace amounts in chlorosilanes after distillation processes. The specific types of hydrocarbons present in the chlorosilane will depend upon the particular chlorosilane and its separation history. The hydrocarbons can include saturated hydrocarbons, unsaturated hydrocarbons and halogenated hydrocarbons.

Adsorbents useful in our process can be any of those known in the art. For example, it can be activated carbon, zeolite, silicalite, carbon molecular sieves, silica gel and the like. When the liquid mixture to be separated is a chlorosilane contaminated with hydrocarbons, the absorbent is selected from activated carbon, silicalite or a carbon molecular sieve.

Once the adsorbent bed is substantially saturated with the adsorbed component, the feed to the adsorbent bed is stopped. By "substantially saturated," it is meant that the adsorbent bed is reduced in its capacity to adsorb the adsorbable component. The adsorbent bed, substantially saturated with the adsorbed component, is regenerated in a two-step process. In the first step, the liquid non-adsorbed component within the bed is vaporized and recovered. Vaporization of the non-adsorbed component is effected by heating the non-adsorbed component to a temperature above its boiling point and below the temperature at which the adsorbed component desorbs from the adsorbent bed. For instance, when the non-adsorbed component is a chlorosilane and the adsorbed component is a hydrocarbon, the non-adsorbed component is heated to a temperature above the boiling point of the chlorosilane and at a temperature lower than that at which the adsorbed hydrocarbons desorb. The composition of the effluent during this first step is similar to the composition of the liquid feed mixture.

Those skilled in the art will recognize that any combination of temperatures and reduced pressures may be used to cause the vaporization of non-adsorbed materials contained within the interstitual cavities and macro pores of the adsorbent bed. Heating of the adsorbent bed may be effected by standard methods, such as external or internal heating elements, or by passing a heated sweep-gas through the adsorbent bed. In a preferred process, a heated inert gas such as nitrogen is passed through the adsorbent bed thereby heating the non-adsorbed component above its boiling point and sweeping the gaseous component from the adsorbent bed.

The non-adsorbed component removed from the adsorption bed in the first desorption step can be recovered by standard methods such as condensation. This component may be used as feed to an adsorption bed to effect further purification.

In the second step of our desorption process, the adsorbed component is desorbed from the adsorbent bed and recovered. The method of desorption in this second step is any method known in the art for desorbing a component from an adsorption bed. This desorption can be effected by increased temperature, reduced pressure, a combination of both, or by desorption into an appropriate liquid media. In a preferred process, desorption is effected by means of a heated inert gas at a temperature which effects desorption of the desorbed material. For example, when the present process is used to remove hydrocarbon contaminates from chlorosilanes, it has been found that flowing nitrogen gas at a temperature greater than 240°C. is an effective method for desorbing hydrocarbons from the adsorbent.

Those skilled in the art will recognize that the present process can be run using one or more adsorbent beds allowing the process to be run as a continuous process by switching feed between the beds to allow regeneration of saturated beds. The present process is particularly useful as an advance over standard thermal swing processes in that we accomplish a highly effective two-step regeneration of the substantially saturated adsorbent bed.

The following example is provided to illustrate the present invention.

A column was loaded with 113 g of dried Purasieve™ 423 silicalite, UOP, Tarrytown, NY. A feed of trimethylchlorosilane containing 4400 ppm of hydrocarbons was fed to the column at a rate of 2.44 mL/h. Effluent from the column was monitored by gas chromatography (GC) using a flame ionization detector (FID). Feed was continued to the column until break through of the hydrocarbons had occurred. Step one of our adsorbent bed regeneration was effected by blowing heated nitrogen through the bed at 62cm³/min, raising the temperature of the bed to 120°C. Desorbed material was condensed from the nitrogen in a pair of cold traps in series at -50°C. and -68°C. Purging was continued until no further condensate was formed. About 95 percent of the product remaining in the adsorbent bed at the start of this regeneration step was recovered as condensate in the first step. Analysis of the condensate from step one by GC-FID showed the presence of trimethylchlorosilane having a hydrocarbon concentration of six percent. Step two of our adsorbent bed regeneration was effected by blowing heated nitrogen through the bed at 62 cm³/min, raising the temperature of the bed to 240°C. Desorbed material was collected and analyzed as described for step one. The resulting condensate comprised 95 percent hydrocarbons.

## Claims

1. An adsorption-desorption process for separating a mixture of components, the process comprising:
(A) feeding a liquid mixture of components to an adsorbent bed which selectively adsorbs at least one component from the mixture and does not substantially adsorb at least one component from the mixture,;
(B) recovering an effluent from the adsorbent bed reduced in the adsorbed component;
(C) substantially saturating the adsorbent bed with the adsorbed component;
(D) stopping feed of the liquid mixture of components to the substantially saturated adsorbent bed; and
(E) regenerating the adsorbent bed in a two-step process, where in a first step liquid non-adsorbed component within the bed is vaporized and recovered and in a second step adsorbed component is recovered from the adsorbent bed.

2. A process according to claim 1 where the liquid mixture comprises a chlorosilane component and a hydrocarbon component, the hydrocarbon component is selectively adsorbed to the adsorbent bed and the effluent recovered from the adsorbent bed in step (B) comprises a chlorosilane reduced in hydrocarbon content.

3. A process according to claim 2 where the adsorbent bed is formed from an adsorbent selected from a group consisting of activated carbon, silicalite and carbon molecular sieve.

4. A process according to claim 1 where the adsorbent bed is formed from an adsorbent selected from a group consisting of activated carbon, zeolite, silicalite, carbon molecular sieve and silica gel.

5. A process according to claim 3 where in the first step of step (E) the liquid non-adsorbed component within the bed is vaporized by passing a heated inert gas through the adsorbent bed at a temperature sufficient to vaporize the chlorosilane without causing significant desorption of the adsorbed component.

6. A process according to claim 5 where in the second step of step (E) the adsorbed component is recovered from the adsorbent bed by passing a heated inert gas through the adsorbent bed at a temperature greater than 240°C.
